# EUROPÄISCHE PATENTANMELDUNG

(11) **EP 1 577 048 A1**
(43) Veröffentlichungstag der Anmeldung: **21.09.2005**
(21) Anmeldenummer: 05005553.2
(22) Anmeldetag: 15.03.2005
(51) Int. Cl.: B23K 26/06, B23K 26/20, B23K 26/36, B23K 26/42, B23P 23/04

(54) **Bearbeitungsvorrichtung mit zwei unterschiedlichen Bearbeitungswerkzeugen und Verfahren zum Steuern derselben**

(30) Priorität: 18.03.2004 AT 4702004
(71) Anmelder: Trotec Produktions- und Vertriebs GMBH, 4600 Wels (AT)
(72) Erfinder: Penz, Andreas, 4612 Scharten (AT); Fazeny, Stephan, 4810 Gmunden (AT)
(74) Vertreter: Secklehner, Günter

(57) **Zusammenfassung**

Die Erfindung bezieht sich auf eine Bearbeitungsvorrichtung (1) und ein Verfahren zum Steuern mehrerer Bearbeitungswerkzeuge (3,4) der Bearbeitungsvorrichtung (1) zur materiellen Bearbeitung von Werkstücken (2). Eine Bearbeitung des Werkstücks (2) ist durch ein erstes Bearbeitungswerkzeug (3), das in Form eines Bearbeitungsstrahls (8a) durch eine erste Strahlenquelle (9), insbesondere eine Laserquelle, erzeugt wird, und durch zumindest ein weiteres Bearbeitungswerkzeug (4) von unterschiedlicher Art oder unterschiedlichen Ursprungs, insbesondere unterschiedlicher Strahlenquelle (10), zum ersten Bearbeitungswerkzeug (3) durchführbar, wobei die unterschiedlichen Bearbeitungswerkzeuge (3,4) wechselweise mit einem Werkstück (2) materiell bearbeitend in Wirkung bringbar sind und zu einem Zeitpunkt von nur einem der Bearbeitungswerkzeuge (3;4) eine Bearbeitung eines Werkstücks (2) durchgeführt wird.

## Beschreibung

Die Erfindung betrifft ein Verfahren zum Steuern von mehreren Bearbeitungswerkzeugen einer Bearbeitungsvorrichtung sowie eine Bearbeitungsvorrichtung, wie diese in den Oberbegriffen der Ansprüche 1 und 19 beschrieben sind.

Es sind aus dem Stand der Technik bereits Bearbeitungsvorrichtungen bekannt, die zur materiellen Bearbeitung von Werkstücken, beispielsweise durch Schneiden oder Gravieren, eine Strahlenquelle für die Erzeugung eines Laserstrahls aufweisen. Der auf das Werkstück gerichtete Abschnitt des Laserstrahls ist hierbei in einer zweidimensionalen Arbeitsebene bzw. einer XY-Ebene frei verstellbar, wobei die Verstellbewegung durch eine Steuereinrichtung, insbesondere einem Rechnersystem, festgelegt wird. Derartige Bearbeitungsvorrichtungen weisen üblicherweise nur eine regelbare Strahlenquelle zur Erzeugung des bearbeitenden Laserstrahles auf.

Weiters sind aus dem Stand der Technik Laserbearbeitungssysteme bekannt, die mehrere Strahlenquellen zur Erzeugung von Laserstrahlen aufweisen, wobei die einzelnen Laserstrahlen zu einem einzigen Arbeitsstrahl zusammengeführt werden. Eine derartige Vorrichtung ist beispielsweise aus der US 6,423,925 B1 und der US 6,313,433 B1 bekannt. Bei diesen Bearbeitungssystemen werden die Laserquellen stets parallel zueinander betrieben, um durch kombinierten, kollinearem Strahlenverlauf die Energie im auf das Werkstück gerichteten Bearbeitungsstrahl zu erhöhen oder durch gleichzeitigen, jedoch getrennten Strahlenverlauf mittels mehrerer gleichzeitig auf ein Werkstück wirkender, gleichartiger Bearbeitungsstrahlen durch ein mehrzeiliges oder rasterartiges Abtasten des Werkstückes die Bearbeitungsgeschwindigkeit zu erhöhen.

Des weiteren ist aus der US 4,877,939 A ist eine Vorrichtung zur Bearbeitung von Werkstücken mittels Laserstrahlung bekannt, die eine erste Strahlenquelle zur Erzeugung eines Laserstrahls mit einer ersten Wellenlänge und eine weitere Strahlenquelle zur Erzeugung eines Arbeitsstrahls mit einer zum ersten Strahl unterschiedlichen Wellenlänge aufweist. Der erste Laserstrahl übernimmt dabei eine Hauptbearbeitung des Werkstücks, insbesondere einen Materialabtrag, wobei der weitere Laserstrahl eine Vorbearbeitung der Oberfläche, insbesondere ein Vorritzen des Werkstücks, vornimmt. Die Bearbeitung des Werkstücks durch die beiden Strahlen erfolgt hierbei nacheinander und entlang desselben Bearbeitungspfades, sodass der Anteil der vom Werkstück reflektierten Strahlung des Bearbeitungslasers reduziert werden kann. Mehrere Bearbeitungsstrahlen zur eigenständigen Bearbeitung unterschiedlicher Werkstofftypen bzw. zur eigenständigen Fertigung von Werkstücken sind nicht vorgesehen.

Von Nachteil ist bei den aus dem Stand der Technik bekannten Laser- Bearbeitungsvorrichtungen und Bearbeitungsverfahren, dass diese nur eine Art von Bearbeitungswerkzeugen in Form eines einzigen Arbeitsstrahles aufweisen, mit dem der Bearbeitungsprozess am Werkstückes durchgeführt werden kann. Der Arbeitsstrahl bzw. Bearbeitungsstrahl, der gegebenenfalls durch mehrere überlagerte Einzelstrahlen gebildet ist, weist im Stand der Technik eine bestimmte Wellenlänge auf bzw. ist auf ein gewisses Spektrum einer Wellenlänge begrenzt. Mit derartigen Bearbeitungsvorrichtungen sind somit nur Werkstücke aus einer bestimmten oder eingeschränkten Kategorie von Werkstoffen bearbeitbar und es müssen Werkstücke mit völlig unterschiedlichen Werkstoffeigenschaften oder inhomogenen Aufbau an jeweils eigenen Bearbeitungsvorrichtungen mit dem entsprechenden Werkzeugen bearbeitet werden. Es war daher bisher notwendig, für die Bearbeitung von Werkstücken mit spezifischen Bearbeitungseigenschaften jeweils eigene Bearbeitungsvorrichtungen zu verwenden, wodurch hohe Anschaffungskosten, eine erhöhter Bedienungsaufwand und ein erhöhter Platzbedarf notwendig war.

Aufgabe der vorliegenden Erfindung ist es, ein Verfahren zum Steuern von mehreren Bearbeitungswerkzeugen einer Bearbeitungsmaschine sowie eine Bearbeitungsvorrichtung zu schaffen, mit denen eine größere und flexiblere Auswahl an Werkstücken mit unterschiedlicher Beschaffenheit, insbesondere unterschiedlichen Werkstoffes oder Aufbaus, bearbeitbar sind.

Die Aufgabe der Erfindung wird jeweils eigenständig durch die Merkmale in den Kennzeichenteilen der Ansprüche 1 und 19 gelöst. Der sich aus diesen Merkmalen ergebende Vorteil liegt vor allem darin, dass mit einer derartigen Bearbeitungsvorrichtung eine umfangreichere und variablere Bearbeitungsmöglichkeit von Werkstücken mit unterschiedlicher Werkstoffbeschaffenheit oder die Bearbeitung von Werkstücken mit in sich inkonsistentem Aufbau, beispielsweise einer strukturierten Ausgestaltung oder inhomogenen Werkstoffen, durchführbar ist. Aufgrund der separaten Auswahlmöglichkeit eines der Bearbeitungswerkzeuge kann in Abhängigkeit der Bearbeitungseigenschaften eines Werkstückes das für den gewünschten Bearbeitungsprozess am Werkstück am besten geeignete Bearbeitungswerkzeug, d.h. entweder der durch die erste Strahlenquelle erzeugte Bearbeitungsstrahl oder das weitere Bearbeitungswerkzeug, verwendet werden. Somit ist es möglich auch Werkstücke zu bearbeiten, die beispielsweise aufgrund einer zu hohen oder geringen Leistungsabgabe durch die erste Strahlenquelle erzeugten Bearbeitungsstrahls nicht bearbeitbar sind, da dies eine nicht zufriedenstellende Bearbeitungsqualität oder eine Zerstörung des Werkstücks hervorrufen würde, wobei eine Bearbeitung des Werkstückes durch das weitere, auf die spezifischen Bearbeitungseigenschaften einer unterschiedlichen Werkstoffgruppe abstimmbare bzw. abgestimmte Bearbeitungswerkzeug ermöglicht ist.

Durch die Merkmale nach zumindest einem der Ansprüche 2 oder 20 wird der Vorteil erreicht, dass durch die zumindest zwei eigenständigen Strahlenquellen, mit denen der Bearbeitungsstrahl, insbesondere Laserstrahl, erzeugt werden kann, der Aufbau der Bearbeitungsvorrichtung durch eine zumindest über Teilabschnitte gemeinsame Verwendung eines Strahlumlenksystems einfach gehalten werden kann. Weiters ist jeweils durch eine für den Bearbeitungsstrahl spezifische, thermische Energieeinbringung eine sehr vielfältige Bearbeitung von Werkstücken möglich. Somit ist mit der Bearbeitungsvorrichtung die Durchführung von Bearbeitungsverfahren, wie Gravieren, Schneiden, Erwärmen bzw. Vorwärmen oder Vorglühen, Verdampfen, Aufschäumen, Farbveränderung bzw. Bleichen von Materialien möglich.

Die Maßnahmen nach zumindest einem der Ansprüche 3 oder 21 sind von Vorteil, da mit jedem der unterschiedliche Wellenlängen aufweisenden Bearbeitungsstrahlen gewisse Bearbeitungsprozesse an einem Werkstück effektiv durchführbar sind, insbesondere in Abhängigkeit eines Werkstoffs, und somit unterschiedliche Materialien wie Kunststoffe oder Metalle durch für speziell diese vorgesehene Bearbeitungsstrahlen bearbeitbar sind. Weiters ist mit den Bearbeitungsstrahlen von unterschiedlicher Eigenschaft je die Durchführung von bestimmten bzw. einer Reihe von gewissen Bearbeitungsverfahren möglich. Beispielsweise kann ein durch die erste Strahlenquelle erzeugter Bearbeitungsstrahl zur Durchführung einer Oberflächenbehandlung, insbesondere einem Anlassen bzw. Glühen, Verfärben, usw., des Werkstücks ausgebildet sein und ein durch die weitere Strahlenquelle erzeugter Bearbeitungsstrahl für eine materialabtragende Bearbeitung des Werkstücks, insbesondere einem Schneiden bzw. Durchtrennen oder Gravieren, ausgebildet sein, wobei eine beliebige Anzahl von weiteren Bearbeitungswerkzeugen für spezielle Bearbeitungsverfahren vorgesehen sein können.

Die im Anspruch 4 oder 21 wiedergegebenen Merkmale sind vorteilhaft, da durch eine derartige Laserkombination erfahrungsgemäß mit sehr hoher Effizienz bei einem hohen Wirkungsgrad unterschiedliche Bearbeitungsverfahren durchführbar bzw. verschiedene Werkstücktypen bearbeitbar sind.

Gemäß den Merkmalen nach zumindest einem der Ansprüche 5 bis 7 oder 22 bis 24 sind eine Vielzahl an aus dem Stand der Technik bekannten Materialabtrageeinrichtungen oder Verfahren mit der erfindungsgemäßen Bearbeitungsvorrichtung verwendbar oder durchführbar, sodass in vorteilhafter Weise die geforderte, hohe Bearbeitungsflexibilität erreicht wird.

Die Maßnahmen gemäß Anspruch 8 sind vorteilhaft, da somit sichergestellt werden kann, dass nur eines der Bearbeitungswerkzeuge zu einem bzw. jedem Zeitpunkt aktiv mit dem Werkstück in Eingriff steht und das gewünschte Bearbeitungsverfahren durchführt und die weiteren Bearbeitungswerkzeuge inaktiv sind.

Die Merkmale betreffend eine Kontrolle der Bearbeitungsstrahlen nach zumindest einem der Ansprüche 9 oder 28 stellen in zweckmäßiger Weise sicher, dass jene durch die Strahlenquellen erzeugten Strahlen, die momentan nicht in Wirkung mit dem Werkstück stehen sollen, deaktiviert bzw. nicht vorhanden sind.

Die Merkmale nach zumindest einem der Ansprüche 10 oder 25 sind von Vorteil, da über die Zuführ- oder Antriebseinrichtung eine weitere, zweckmäßige Möglichkeit angegeben ist, um den Eingriff bzw. die Wirksamkeit des Bearbeitungswerkzeugs am Werkstück zu kontrollieren, ohne dass eine Abschaltung oder Deaktivierung des Betriebszustandes der Bearbeitungswerkzeuge vorgenommen werden muss.

Vorteilhafte Maßnahmen sind im Anspruch 11 beschrieben, wobei mit diesen eine Bestimmung des Verlaufes der Strahlengänge bzw. Pfade der Bearbeitungsstrahlen im Strahlumlenksystem in gegenseitiger Abhängigkeit möglich ist und somit die Wirkung der Bearbeitungsstrahlen am Werkstück festgelegt werden kann.

Die Merkmale nach zumindest einem der Ansprüche 12 oder 26 sind deshalb von Vorteil, da durch eine Steuereinrichtung die Bearbeitungsvorrichtung insbesondere automatisiert kontrolliert werden kann und eine entsprechende, wechselweise Bestimmung der Wirksamkeit eines der Bearbeitungswerkzeuge am Werkstück vorgenommen werden kann. Durch von der Steuereinrichtung definierte Steuersignale oder vorgegebene Schaltstellungen kann somit eine unbeabsichtigte, parallele Bearbeitung des Werkstücks durch zwei Bearbeitungswerkzeuge gleichzeitig verhindert werden.

Die Merkmale nach zumindest einem der Ansprüche 13 oder 27 sind von Vorteil, da mittels dem angegebenen Schaltelement ein zweckmäßiges Mittel zur Kontrolle der Bearbeitungswerkzeuge, insbesondere zur Aktivierung oder Deaktivierung der Strahlenquellen, angegeben ist, wobei insbesondere über den Wechselschalter die Wirksamkeit von nur einem der Bearbeitungswerkzeuge eindeutig bestimmbar ist.

Die Merkmale nach zumindest einem der Ansprüche 14 oder 29 sind von Vorteil, da bei kollinearem Strahlengang bzw. Strahlenpfad der unterschiedlichen Bearbeitungsstrahlen diese über die selben Elemente bzw. Umlenkspiegel im Strahlumlenksystem transportierbar sind und ein kompakter Aufbau des Strahlumlenksystems realisierbar ist. Ein weiterer Vorteil kann darin bestehen, dass bei Deaktivierung eines ersten Bearbeitungswerkzeugs an einem Bearbeitungspunkt am Werkstück bei Aktivierung des weiteren Bearbeitungswerkzeugs dieses am selben Bearbeitungspunkt wirksam ist und die Bearbeitung entlang des Bearbeitungspfads nahtlos fortgesetzt werden kann, was bei wechselnder Beschaffenheit von Werkstücken. beispielsweise aus unterschiedlichen Werkstoffen oder strukturiertem Aufbau, von Vorteil ist.

Die Merkmale nach zumindest einem der Ansprüche 15 oder 30 sind von Vorteil, da die Strahlenpfade der von den unterschiedlichen Strahlenquellen erzeugten bzw. zu erzeugenden Bearbeitungsstrahlen an verschiedener Stelle aus dem Strahlumlenksystem austreten und an unterschiedlichen, voneinander distanzierten Bearbeitungspunkten an einem Werkstück oder unterschiedlichen Werkstücken auftreffen. Beispielsweise besteht somit auch die Möglichkeit, dass an einem ersten Werkstück ein Bearbeitungsstrahl der ersten Strahlenquelle die Bearbeitung vornimmt und zeitgleich an einem weiteren Werkstück ein Bearbeitungsstrahl der weiteren Strahlenquelle eine Bearbeitung des weiteren Werkstücks vornimmt. Es können die Strahlengänge bzw. Pfade der unterschiedlichen Bearbeitungsstrahlen dabei unabhängig voneinander verfahr- und kontrollierbar sein, wobei die unterschiedlichen Bearbeitungsstrahlen gegebenenfalls über die Steuereinrichtung in deren Leistung und in deren voneinander unabhängigen Bearbeitungspfaden kontrolliert werden.

Die Merkmale nach zumindest einem der Ansprüche 14, 15 oder 31 sind auch deshalb von Vorteil, da über eine Führung der Strahlengänge bzw. Pfade der Bearbeitungsstrahlen über die selben oder eigenständige Umlenkspiegel entweder ein kompakter oder kostengünstiger Aufbau der Bearbeitungsvorrichtung erzielt wird oder ein hohes Maß an Bearbeitungsflexibilität durch eigenständige und separat voneinander regelbare Strahlengänge bzw. Pfade ermöglicht wird.

Die Merkmale nach zumindest einem der Ansprüche 16 oder 32 sind von Vorteil, da über ein Justagewerkzeug die ein oder mehreren Bearbeitungswerkzeuge in deren Wirkung mit dem Werkstück kalibrierbar sind. Ausgestaltungen gemäß den Ansprüchen 17, 18 oder 33, 34 sind dabei besonders zweckmäßig, da über einen durch eine weitere Strahlenquelle erzeugten Justagestrahl, welcher keine Bearbeitung am Werkstück vornimmt, bei Verwendung von Bearbeitungsstrahlen als Bearbeitungswerkzeuge und bei kollinearem Verlauf des Justagestrahles zu dem Bearbeitungsstrahlen im Strahlumlenksystem mit einfachen Mitteln und sehr exakt der Eingriff der Bearbeitungsstrahlen am Werkstück simuliert werden kann. Der Justagestrahl ist hierbei vorzugsweise von unterschiedlicher Leistung bzw. Wellenlänge zu den Bearbeitungsstrahlen, wobei der Justagestrahl gegebenenfalls zeitgleich mit dem Bearbeitungsstrahl auf ein gemeinsames Werkstück wirken kann.

Die Erfindung wird im nachfolgenden anhand der in den Zeichnungen dargestellten Ausführungsbeispiele näher erläutert.

Es zeigen:
- Fig. 1: eine erfindungsgemäße Bearbeitungsvorrichtung in einer Fertigungsanlage in Schrägansicht;
- Fig. 2: eine mögliche Ausführungsvariante der erfindungsgemäßen Bearbeitungsvorrichtung, in perspektivischer Schrägansicht;
- Fig. 3: eine weitere Ausführungsvariante der Bearbeitungsvorrichtung, in perspektivischer Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

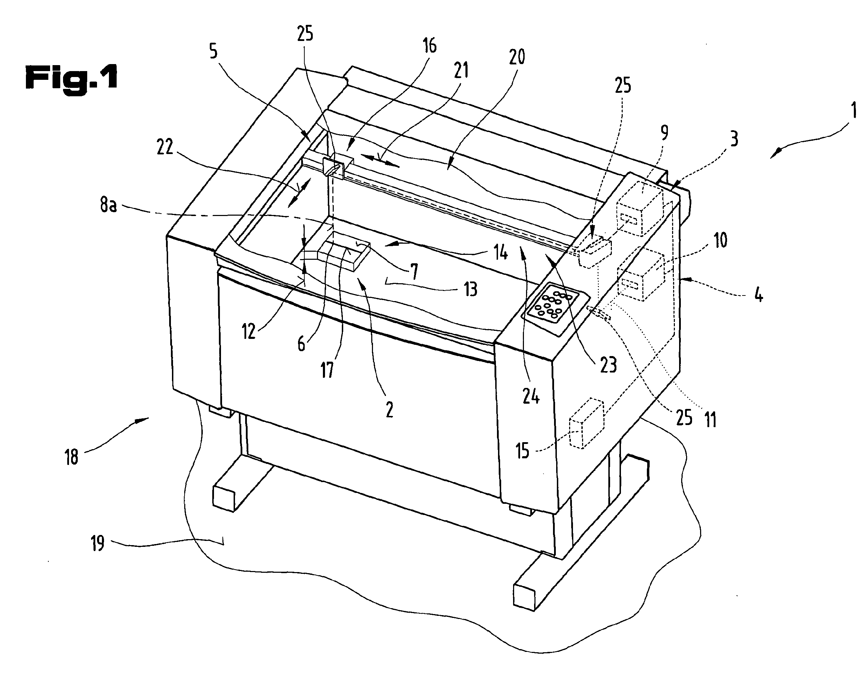

In der Fig. 1 ist eine erfindungsgemäße Bearbeitungsvorrichtung 1 zur Bearbeitung von Werkstücken 2 dargestellt. Die Bearbeitungsvorrichtung 1 weist mehrere Bearbeitungswerkzeuge 3, 4 auf, die jeweils zur Durchführung einer materiellen Bearbeitung, wie z.B. einem Materialabtrag oder einer Materialerhitzung, eines Werkstücks 2 ausgebildet sind. Grundsätzlich weist die Bearbeitungsvorrichtung 1 zumindest zwei Bearbeitungswerkzeuge 3, 4 auf, wobei auch eine beliebige Anzahl von Bearbeitungswerkzeugen 3, 4 vorgesehen sein können.

Die Bearbeitungsvorrichtung 1 weist weiters eine Verstelleinrichtung 5 auf, mit der die Bearbeitungswerkzeuge 3, 4 in deren Wirkung am Werkstück 2 derartig manipuliert werden können, dass eine Bearbeitungsstelle 6 am Werkstück 2, an dem ein Bearbeitungswerkzeug 3; 4 mit einer Oberfläche 7 des Werkstücks 2 in Eingriff steht, relativ zu diesem bewegt wird. Hierzu ist die Verstelleinrichtung 5 zur Erzeugung einer Verstellbewegung, insbesondere in einer XY-Ebene, mit den Bearbeitungswerkzeugen 3, 4 wirkungsverbunden.

Grundsätzlich ist ein erstes Bearbeitungswerkzeug 3 in Form eines Bearbeitungsstrahls 8a gebildet, der durch eine erste Strahlenquelle 9 erzeugt bzw. ausgesendet wird und der durch elektromagnetische Wellen gebildet ist. Die Strahlenquelle 9 ist dabei vorzugsweise durch eine Laserquelle gebildet, die zur Erzeugung eines Bearbeitungsstrahls 8a in Form eines Laserstrahls mit einer ersten Wellenlänge geeignet ist.

Das zumindest eine, weitere Bearbeitungswerkzeug 4 ist von unterschiedlicher bzw. fremder Art oder Gattung oder unterschiedlichen Ursprungs zum ersten Bearbeitungswerkzeug 3.

Die unterschiedlichen Bearbeitungswerkzeuge 3, 4 werden wechselweise mit dem Werkstück 2 in Wirkung gebracht und es wird zu einem Zeitpunkt von nur einem der Bearbeitungswerkzeuge 3, 4 eine materielle Bearbeitung des Werkstückes 2 durchgeführt. Eine derartiger Bearbeitungsablauf ist vorteilhaft, da für unterschiedliche Bearbeitungsfälle, insbesondere in Abhängigkeit eines Aufbaus oder Werkstoffs des Werkstückes 2, eines von mehreren geeigneten Bearbeitungswerkzeugen 3; 4 ausgewählt werden kann und unterschiedliche Bearbeitungsabläufe mit der Bearbeitungsvorrichtung durch alternative bzw. alternierende Auswahl eines für den Bearbeitungsablauf vorgesehenen Bearbeitungswerkzeuges 3; 4 an Werkstücken 2 durchführbar sind. Ein Parallelbetrieb zur zeitgleichen Bearbeitung desselben Werkstücks 2 durch mehrere Bearbeitungswerkzeuge 3, 4, insbesondere eine Überlagerung von Bearbeitungsstrahlen 8a, 8b zur energetischen Nivellierung des Bearbeitungsstrahles 3; 4, ist somit nicht notwendig.

Bearbeitungswerkzeuge 3, 4 unterschiedlicher Art können sich dabei derartig von einander unterscheiden, dass mit diesen unterschiedliche Bearbeitungsverfahren, beispielsweise mechanische bzw. spannende, thermische oder chemische Materialabtrageverfahren, durchführbar sind. Das weitere Bearbeitungswerkzeug 4 kann hierbei durch eine gegenüber dem Bearbeitungsstrahl 8a des ersten Bearbeitungswerkzeugs 3 entsprechend unterschiedlich, artfremd ausgebildetes Materialabtragemittel zur Durchführung eines der genannten Bearbeitungsverfahren gebildet sein. Für einen Materialabtrag am Werkstück 2 kann das weitere Bearbeitungswerkzeug 4 beispielsweise durch einen Fräser, Bohrer, Meißel oder dergleichen, oder einen durch einen elektrischen Potentialunterschied erzeugten Funken oder Lichtbogen, insbesondere einen Erosionsfunken, oder ein unter Druck stehendes Medium mit einer hohen Relativgeschwindigkeit zum Werkstück 2, insbesondere eine Flüssigkeit, wie einem Wasserstrahl oder einem Gas, gebildet sein.

Die Bearbeitungswerkzeuge 3, 4 können auch von gleicher Art bzw. Gattung sein, jedoch von unterschiedlichem Ursprung, insbesondere unterschiedliche Quelle, sein. Eine bevorzugte und nachfolgend detailliert beschriebene Ausführungsvariante kann darin liegen, dass die Bearbeitungswerkzeuge 3, 4 je durch eigenständige Strahlenquellen 9, 10 erzeugt und ausgesendet werden. Im in der Fig. 1 dargestellten Ausführungsbeispiel ist das weitere Bearbeitungswerkzeug 4 durch einen von der weiteren Strahlenquelle 10 erzeugten Bearbeitungsstrahl 8b ausgebildet, wobei die Strahlenquelle 10 vorzugsweise wiederum durch eine Laserquelle zur Erzeugung des als Laserstrahl gebildeten Bearbeitungsstrahles 8b ausgebildet ist. Hierbei sind die Bearbeitungswerkzeuge 3, 4 von der selben Gattung in Form von Bearbeitungsstrahlen 8a, 8b gebildet, es weisen die Bearbeitungsstrahlen 8a, 8b bevorzugt jedoch unterschiedliche Eigenschaften bzw. Charakteristiken, insbesondere unterschiedliche Wellenlängen bzw. Leistung, auf.

Es sei zum Verständnis der Darstellungen in Fig. 1 bis 3 angemerkt, dass der aktive bzw. mit dem Werkstück 2 in Eingriff stehende Bearbeitungsstrahl 8a in strichpunktierten Linien dargestellt ist und ein imaginärer Verlauf des weiteren Bearbeitungsstrahls 8b, der inaktiv bzw. außer Eingriff mit dem Werkstück 2 steht, in Form von dessen Strahlenpfad 11 zum besseren Verständnis in punktierten Linien dargestellt ist. Grundsätzlich steht an einem Zeitpunkt nur einer der beiden Bearbeitungsstrahlen 8a; 8b mit demselben Werkstück 2 in materialbearbeitendem Eingriff.

Es ist mit der Bearbeitungsvorrichtung 1 beispielsweise eine Bearbeitung des Werkstücks 2 durch Materialabtrag, insbesondere Gravieren, Ritzen, Schneiden oder dgl., möglich oder ein thermisches Behandlungsverfahren wie Glühen oder dgl. möglich. Ein Materialabtrag zum Gravieren des Werkstücks 2 kann an der Oberfläche 7 des Werkstücks 2 über eine Tiefe, die geringer als Dicke 12 des Werkstücks 2 ist, erfolgen oder es kann in einem Schneide- bzw. Trennvorgang mittels den Bearbeitungswerkzeugen 3, 4 über die gesamte Dicke 12 des Werkstücks 2 ein Materialabtrag am Werkstück 2 durchgeführt werden. Die erfindungsgemäße Bearbeitungsvorrichtung 1 ist nicht auf einen zu bearbeitenden Werkstofftyp beschränkt, sondern zeichnet sich aufgrund der mehreren, unterschiedlichen Bearbeitungswerkzeuge 3, 4 vielmehr durch eine erhöhte Flexibilität in der Bearbeitung unterschiedlicher Materialien, beispielsweise Metallen, Kunststoffen, textilen Stoffen, Naturfasern oder dergleichen aus.

An einer Werkstückaufnahme 13 angeordnete Werkstücke 2 können somit über die Bearbeitungswerkzeuge 3, 4 in Bearbeitungszonen 14 bearbeitet werden, wobei der Bearbeitungsablauf bevorzugt durch zumindest eine, mit den Bearbeitungswerkzeugen 3, 4 und/oder der Verstelleinrichtung 5 verbundenen oder verbindbaren Steuereinrichtung 15 gesteuert und/oder geregelt wird. Die Verstelleinrichtung 5 kann dabei derart geregelt werden, dass ein Bearbeitungskopf 16, von dem ausgangsseitig der auf das Werkstück 2 zur Materialabnahme gerichtete Teil des Bearbeitungswerkzeugs 3, 4 ausgeht, entsprechend der durch die Steuereinrichtung 15 vorgegebenen Signale zur Steuerung bzw. Regelung der Verstelleinrichtung relativ zur Werkstückaufnahme 13 bzw. dem Werkstück 2 entlang eines Bearbeitungspfades 17 verstellbar bzw. bewegbar ist. Die Steuereinrichtung 15 ist bevorzugt durch ein computerisiertes Rechnersystem gebildet, welches über eine in einem Speicherelement hinterlegte Steuerlogik bzw. Software mittels einem Mikroprozessor Steuersignale zur Kontrolle der Bearbeitungswerkzeuge 3, 4 generiert.

Wie in Fig. 1 exemplarisch dargestellt, ist die Bearbeitungsvorrichtung 1 vorzugsweise zur Verwendung mit einer Fertigungsanlage 18 vorgesehen, die auf einer Aufstandsfläche 19 positioniert ist und im gezeigten Ausführungsbeispiel einen Innenraum 20 aufweist, in welchem die Werkstückaufnahme 13 sowie die Bearbeitungswerkzeuge 3, 4 durch die Verstelleinrichtung 5 gemäße den Pfeilen 21, 22 gezeigten Richtungen verfahrbar sind. Die Werkstückaufnahme 13 ist als Aufnahmeboden gebildet, wobei die Werkstückaufnahme 13 selbstverständlich durch Spann- und/oder Positioniereinrichtungen zur positionsfixierten Halterung der Werkstücke 2 gebildet sein kann, beispielsweise mechanische Spanneinrichtungen, wie Schraubstöcke oder formschlüssige Positionierrahmen gebildet sein kann. Derartige Fertigungsanlagen 18, wie in Fig. 1 dargestellt, sind in deren grundlegenden Aufbau aus dem Stand der Technik bekannt, weshalb an dieser Stelle nicht näher auf deren Ausgestaltung eingegangen wird. Die in Fig. 1 dargestellte Fertigungsanlage 18 ist nur eine beispielsweise Anwendungsmöglichkeit der Bearbeitungsvorrichtung 1, wobei gegebenenfalls die Bearbeitungsvorrichtung 1 völlig unabhängig von einer derartigen Fertigungsanlage 18 als eigenständige Baueinheit gebildet sein kann.

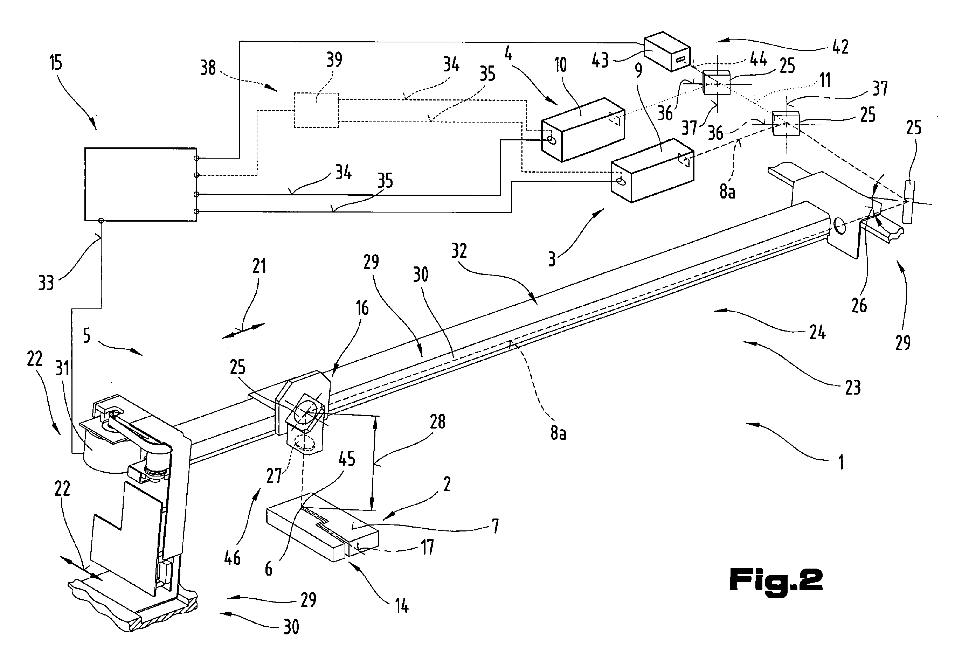

In Fig. 2 ist die Bearbeitungsvorrichtung 1 mit der Verstelleinrichtung 5 und den über diese bewegbaren Bearbeitungswerkzeuge 3, 4 gezeigt.

Der Bearbeitungsvorrichtung 1 kann eine Zuführ- oder Antriebseinrichtung 23 aufweisen, mit der die Bearbeitungswerkzeuge 3, 4 mit dem Werkstück 2 in Eingriff bzw. Wirkung zur materiellen Bearbeitung bringbar sind. Die Zuführ- oder Antriebseinrichtung 23 ist vorrangig zur Energieerzeugung und/oder Energieübertragung bzw. Energiezuführung für den Betrieb des mit dem Werkstück 2 in Eingriff befindlichen Bearbeitungswerkzeugs 3; 4 ausgebildet. Gemäß Fig. 2 weist die Zuführ- oder Antriebseinrichtung 23 die Strahlenquellen 9, 10 und ein optisches Stahlumlenksystem 24 zum Transport des aktiven Bearbeitungsstrahls 8a; 8b von einer der im aktiven Modus befindlichen Strahlenquellen 9; 10 zum Bearbeitungspunkt 6 am Werkstück 2 auf.

Gemäß dem in Fig. 2 gezeigten Ausführungsbeispiel sind die Bearbeitungswerkzeuge 3, 4 jeweils durch die Strahlenquellen 9, 10 bzw. von diesen erzeugte Bearbeitungsstrahlen 8a, 8b gebildet, wobei die Bearbeitungsstrahlen 8a, 8b je entlang eines durch das Strahlumlenksystem 24 bestimmten Strahlenpfades 11 verlaufen. Die Bearbeitungsstrahlen 8a, 8b werden über die als Strahlumlenksystem 24 gebildete Zuführ- oder Antriebseinrichtung 23 dem Werkstück 2 zugeführt. Das Strahlumlenksystem 24 weist zu diesem Zweck mehrere optische Elemente zur Strahlenumlenkung, insbesondere Umlenkspiegel 25, auf, die einen in einem Einfallswinkel auf diese auftreffenden Bearbeitungsstrahlen 8a, 8b in einem Reflexionswinkel 26 reflektieren. Als Bearbeitungskopf 16 ist in weiterer Folge jene Baueinheit bezeichnet, die aus einer Fokussierungslinse 27 und einem dieser vorgeordneten Umlenkspiegel 25 besteht, der den Bearbeitungsstrahl 8a; 8b ausgangsseitig von der Zuführ- oder Antriebsvorrichtung 23 auf das Werkstück 2 abgibt, d.h. der dem Bearbeitungsstrahl 8a; 8b über einen Abschnitt 28 direkt auf die Oberfläche 7 des Werkstücks 2 richtet bzw. lenkt. Der durch den Umlenkspiegel 25 des Bearbeitungskopfes 16 abgelenkte Bearbeitungsstrahl 8a; 8b tritt somit durch die Fokussierungslinse 27, welche den Bearbeitungsstrahl 8a; 8b an der Bearbeitungsstelle 6, insbesondere einem Brennpunkt, bündelt. Die Brennweite zwischen Bearbeitungsstelle 6 und Fokussierungslinse 27 kann hierbei verstellbar sein, wie dies aus dem Stand der Technik bekannt ist.

Die Verstelleinrichtung 5 ist zumindest zur linearen Verstellung des Bearbeitungskopfes 16 entlang bevorzugt zweier Achsen in einem kartesischen Koordinatensystem gebildet, sodass der Bearbeitungskopf 16 zumindest in einer X-Richtung gemäß Pfeil 21 und einer Y-Richtung gemäß Pfeil 22 verstellbar ist. Es ist somit eine Verstellung des Bearbeitungskopfs 16 in einer zweidimensionalen XY-Ebene, die beispielsweise parallel zum Aufnahmeboden bzw. der Werkstückaufnahme 13 verläuft, möglich, wobei zur Steuerung und/oder Regelung der Verstelleinrichtung 5 diese mit der Steuereinrichtung 15 verbunden ist. Zur Erzeugung einer Verstellbewegung kann die Verstelleinrichtung 5 dabei Führungsanordnungen 29, insbesondere eine Linearführung 30, und einen Bewegungserzeuger 31, insbesondere einen Rotationsmotor, aufweisen, wobei der Bewegungserzeuger 31 mittels Übertragungselementen, beispielsweise Riemen oder dgl., mit den Führungsanordnungen 29, insbesondere Linearführungen 30, in Wirkungsverbindung stehen. Vorrichtungen Bewegungserzeugung bzw. zur Umwandlung der Rotations- in die Linearbewegung, beispielsweise Zahnstangen oder Spindeltriebanordnungen oder dgl., sind dem Fachmann aus dem Stand der Technik bekannt und es wird an dieser Stelle nicht näher auf diese eingegangen. Es bildet der Bearbeitungskopf 16 das letzte bewegliche Glied der kinematischen Bewegungskette der Verstelleinrichtung 5 und es ist dieser somit linear in die Richtungen gemäß Pfeil 21 und 22 verstellbar, wobei sich die Anordnung des Bearbeitungskopfes 16 an einem dargestellten, balkenartigen Tragarm 32, der über die genannten Führungsanordnungen 29 verstellbar ist, als zweckmäßig erwiesen hat.

Es sei an dieser Stelle angemerkt, dass selbstverständlich weitere, aus dem Stand der Technik bekannte Einrichtungen zur Positionierung von Gegenständen in Verbindung der erfindungsgemäße Bearbeitungsvorrichtung 1 verwendbar sind, wobei hierzu beispielsweise Bahn oder Koordinaten punktgesteuerte Handhabungs- bzw. Verstelleinrichtung, insbesondere Manipulatoren mit zwei Freiheitsgraden zur Linearverstellung in einer Ebene, zum Einsatz kommen können.

Die Steuereinrichtung 15 ist über eine Steuerleitung 33 mit dem Bewegungserzeuger 31 zu dessen Steuerung bzw. Regelung verbunden und über weitere Steuerleitungen 34 und 35 mit den Strahlenquellen 9, 10 verbunden. Somit kann durch die Steuereinrichtung die Verstelleinrichtung 5 zur Positionierung des Bearbeitungskopfes 16 an jedem beliebigen Punkt innerhalb eines möglichen Bearbeitungsbereichs, vorzugsweise der XY-Ebene, entlang eines durch die Steuervorrichtung 15 vorgegebenen bzw. berechneten Bearbeitungspfads 17 kontrolliert werden. Es sei an dieser Stelle auch die Möglichkeit erwähnt, dass die Verstelleinrichtung 5 auch zur Verstellung innerhalb eines Dreikoordinatensystems gebildet sein kann, sodass ein räumliches Verstellen des Bearbeitungskopfes 16 in drei Richtungen ermöglicht wäre.

Die Bearbeitungswerkzeuge 3, 4 in der Bearbeitungsvorrichtung 1 sind erfindungsgemäß derartig ausgebildet, dass von nur einem der zumindest zwei Bearbeitungswerkzeuge 3; 4 unterschiedlicher Art oder Ursprungs zu einem Zeitpunkt eine Bearbeitung von einem Werkstücks 2 durchführbar ist. Hierzu kann aus sämtlichen Bearbeitungswerkzeugen 3, 4 eines von diesen in einen aktiven Modus geschalten werden und die weiteren Bearbeitungswerkzeuge 3, 4 in einen inaktiven bzw. passiven Modus geschalten werden. Die aktiven bzw. passiven Bearbeitungswerkzeuge 3, 4 können manuell z.B. über Benutzereingaben oder über eine automatisierte Steuerlogik bzw. ein Steuerprogramm festgelegt werden.

Das im aktiven Modus befindliche Bearbeitungswerkzeug 3; 4 ist an einem Zeitpunkt somit nur zur alleinigen Bearbeitung des Werkstücks 2, also für einen Einzelbetrieb, vorgesehen, wobei das zumindest eine, weitere Bearbeitungswerkzeug 3; 4 zu diesem Zeitpunkt außer Wirkung bzw. Eingriff mit dem genannten Werkstück 2 steht. Die Bearbeitungswerkzeuge 3, 4, insbesondere Strahlenquellen 9, 10, werden zu diesem Zweck beispielsweise in Art einer Alternativ- oder Wechselschaltung gesteuert, sodass diese jeweils eigenständig oder unter gegenseitiger Kopplung aktivier- oder deaktivierbar sind, wobei bei Aktivierung eines der Bearbeitungswerkzeuge 3; 4 das zumindest eine, weitere Bearbeitungswerkzeug 3; 4 alternierend deaktiviert wird bzw. bleibt, d.h. nicht zur Bearbeitung des Werkstücks 2 wirksam ist. Mit der erfindungsgemäßen Bearbeitungsvorrichtung 1 ist die Bearbeitungswerkzeuge 3, 4 somit derart gesteuert bzw. steuerbar, dass zu jedem Zeitpunkt an einem Werkstück 2 nur von einem der Bearbeitungswerkzeuge 3; 4 eine materielle Bearbeitung durchgeführt wird.

Eine Deaktivierung eines der Bearbeitungswerkzeuge 3; 4 kann derartig erfolgen, dass der Bearbeitungsstrahl 8a; 8b, der an der Bearbeitungsstelle 6 am Werkstück 2 auftrifft, außer Wirkung bzw. Eingriff mit dem Werkstück 2 gebracht wird. Dies kann entweder durch Abschalten oder Reduzierung der Leistung des Bearbeitungsstrahls 8a; 8b auf ein Nullniveau erfolgen oder durch Um- bzw. Ablenkung des Bearbeitungsstrahls 8a; 8b derartig erfolgen, dass dieser nicht auf das Werkstück 2 gelenkt wird und nicht auf diesem auftrifft. Zur Abschaltung oder Drosselung der abgegebenen Leistung der zumindest einen Strahlenquelle 9, 10 in dem Bereich eines Nullwerts kann die über die Steuerleitung 34, 35 mit der Strahlenquelle 9, 10 verbundene Steuervorrichtung 15 eine entsprechende Ansteuerung oder Regelung der in Form des Bearbeitungsstrahls 8; 8a abgegebenen Energie der Strahlenquellen 9, 10 vornehmen.

Des weiteren ist es möglich, dass die Bearbeitungswerkzeuge 3, 4 über Verstellung des Zuführ- oder Antriebssystems 23 umgelenkt werden und außer Eingriff bzw. in Wirkung mit dem Werkstück 2 gebracht werden. Dies erfolgt insbesondere durch die genannte Um- bzw.

Ablenkung des Bearbeitungsstrahls 8a; 8b mittels Verstellung von einzelnen Umlenkspiegeln 25, insbesondere im Bearbeitungskopf 16, des Strahlumlenksystems 24, sodass der wirksame Bearbeitungsstrahl 8a; 8b einer Strahlenquelle 9, 10 zwar innerhalb eines Teilabschnitts des Strahlumlenksystems 24 wirksam ist, jedoch der Bearbeitungsstrahl 8a; 8b nicht auf die Oberfläche 7 des Werkstücks 2 gelenkt ist.

Zum Um- bzw. Ablenken des aktiven Bearbeitungsstrahls 8a; 8b kann eine so genannte Strahlweiche angeordnet sein, die insbesondere nahe den Strahlenquellen 9, 10 angeordnet ist. Die Strahlweiche kann aus einzelnen Komponenten des Strahlumlenksystems 24, insbesondere einzelne Umlenkspiegel 25, die mit einer nicht näher dargestellten Antriebs- oder Verstelleinrichtung in Wirkverbindung stehen, bestehen, sodass die Umlenkspiegel 25 beispielsweise um Achsen 36, 37 verschwenkbar sind und/oder in deren Längsrichtung und/oder Querrichtung mittels Führungsschlitten oder dgl. verschiebbar sind. Die Steuerung des aktiven Bearbeitungsstrahls 8a; 8b kann durch hineinbewegen und positionieren eines Umlenkspiegels 25 in den Strahlenpfad 11 erfolgen, um den gewünschten Bearbeitungsstrahl 8a; 8b in die benötige Richtung im Stahlenumlenksystem 24 zu lenken und den zumindest einen, weiteren Bearbeitungsstrahl 8a; 8b aus dem gemeinsamen Strahlenpfad 11 herauszulenken. Weitere Möglichkeiten der Strahlumlenkung können durch die Anordnung optischer Sperrelemente, insbesondere Schiebeblenden oder dgl., zum Blockieren eines Bearbeitungsstrahles 8a; 8b oder durch eine bewegliche, beispielsweise verschwenkbare, Lagerung der Strahlenquellen 9, 10 zur Einstellung des Austrittswinkels des Bearbeitungsstrahles 8a; 8b gegeben sein. Abwandlungen des Strahlumlenksystems 24, insbesondere betreffend die Anordnung und Anzahl bzw. die Verstellwege der Umlenkspiegel 25, mit dem Ziel der Steuerung der Wirksamkeit der Bearbeitungsstrahlen 8a, 8b liegen im Können des Fachmanns und werden der Einfachheit halber an dieser Stelle nicht weiter ausgeführt.

Gemäß der in Fig. 2 dargestellten Ausführungsvariante sind die Umlenkspiegel starr im Strahlumlenksystem 24 positioniert angeordnet, wobei ein gemeinsamer bzw. kollinearer Strahlenpfad 11 mittels semitransparent ausgebildeter Umlenkspiegel 25, d.h. Umlenkspiegel 25 die an einer Seite Strahlung reflektieren und an der weiteren Seite strahlungsdurchlässig sind, erreicht wird. In Fig. 2 ist der der Laserquelle 9 nachgeordnete Umlenkspiegel 25 derartig halbdurchlässig ausgebildet, wobei der Aufbau derartige Umlenkspiegel 25, die z.B. mit speziellen Beschichtungen versehen sind, aus dem Stand der Technik bekannt ist.

Die Aktivierung oder Deaktivierung der Bearbeitung der Bearbeitungswerkzeuge 3, 4 kann durch die Steuereinrichtung 15, die mit dem Bearbeitungswerkzeug 3, 4 oder der Zuführ-oder Antriebseinrichtung 23 zur Steuerung oder Regelung verbunden ist, erfolgen. Des weiteren ist es möglich, dass die Bearbeitungswerkzeuge 3, 4 oder einzelne Komponenten, insbesondere Umlenkspiegel 25, der Zuführ- oder Antriebseinrichtung 23 über Schaltelemente 38 der Steuereinrichtung 15 aktiviert oder deaktiviert werden. Beispielsweise ist an den Strahlenquellen 9, 10 jeweils ein derartiges Schaltelement angebracht, wobei in einer Einschaltstellung durch die Strahlenquelle 9, 10 der Bearbeitungsstrahl 8a, 8b abgegeben wird und in einer Ausschaltstellung die Erzeugung eines Bearbeitungsstrahls 8a, 8b unterbrochen ist bzw. nicht erfolgt.

In Fig. 2 ist in gestrichelten Linien ein weiteres Beispiel für ein Schaltelement 38 dargestellt, wobei durch dieses in Art eines symbolisch dargestellten Wechselschalters 39 gebildet ist, mit dem eine mit diesem verbundene Eingangsleitung an eine von mehreren Leitungen schaltbar ist. Wie dargestellt ist der eingangsseitig mit dem Wechselschalter 39 verbundene Steuerausgang der Steuereinrichtung 15 an eine der Steuerleitungen 34, 35, die mit den Strahlenquellen 9, 10 verbunden sind, schaltbar. Selbstverständlich ist es auch möglich, dass in eine Energieversorgungsleitung zwischen einer Energiequelle und den Strahlenquellen 9, 10 ein derartiges, als Wechselschalter 39 ausgebildetes Schaltelement 38 angeordnet ist und durch Bestimmung der Schaltstellung des Wechselschalters 39 ein gewünschtes Bearbeitungswerkzeug 3, 4 mit der nicht näher dargestellten Energiequelle verbunden werden kann und das Bearbeitungswerkzeug 3; 4 entsprechend in Betrieb genommen oder aktiviert werden kann. Abwandlungen von Schaltelementen 38 bzw. elektronischen Schaltungen zur Aktivierung oder Deaktivierung der Strahlenquellen 9, 10 liegen im Können des Fachmanns und stellen dementsprechend äquivalente Ausgestaltungen zum Erfindungsgegenstand dar.

In Fig. 2 ist eine Ausführungsvariante dargestellt, bei der die beiden Strahlenquellen 9, 10 im Strahlumlenksystem 24 entlang desselben Strahlenpfades 11 - in punktierten Linien dargestellt -, der durch die Umlenkspiegel 25 bestimmt wird, dem Werkstück 2 zugeführt werden, wobei nur einer der Bearbeitungsstrahlen 8a; 8b - in gestrichelten Linien dargestellt - aktiv ist. Erfolgt ein Wechsel der Bearbeitungswerkzeuge 3, 4 durch Deaktivierung eines bisher in Betrieb befindlichen Bearbeitungswerkzeugs 3 und Aktivierung des bisher außer Betrieb befindlichen Bearbeitungswerkzeugs 4, bleibt die Bearbeitungsstelle 6 am Werkstück 2 unverändert und es ist das bisher außer Betrieb befindliche Bearbeitungswerkzeug 4 an der Bearbeitungsstelle 6 wirksam. Beispielsweise ist es somit möglich, während der Bearbeitung des Werkstücks 2 durch das erste Bearbeitungswerkzeug 3 dieses zu deaktivieren, wobei die Verstelleinrichtung 5 ab dem Deaktivierungszeitpunkt vorzugsweise in einer Ruhestellung verharrt, sodass durch Aktivierung des weiteren Bearbeitungswerkzeugs 4 die Bearbeitung des Werkstücks 2 an der selben Bearbeitungsstelle fortgesetzt werden kann. Insbesondere inhomogene Werkstücke 2 mit wechselnden Materialeigenschaften bzw. Zonen mit unterschiedlichen Bearbeitungseignungen können somit wechselweise mit den geeigneten Bearbeitungswerkzeugen 3, 4 gefertigt werden.

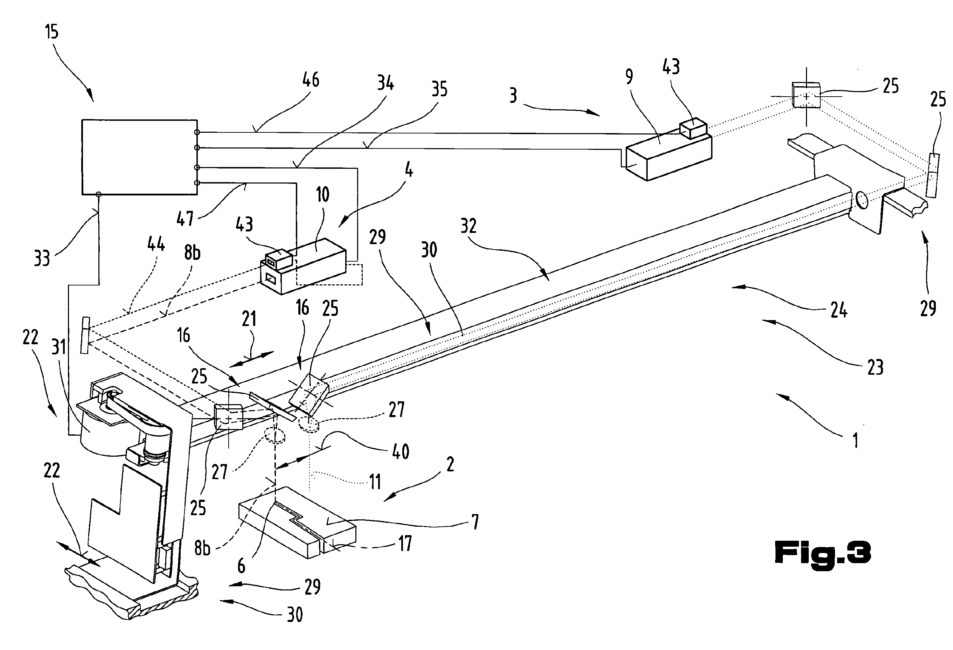

In der Fig. 3 ist ein weiteres Ausführungsbeispiel der erfindungsgemäßen Bearbeitungsvorrichtung 1 dargestellt, bei der die Bearbeitungswerkzeuge 3, 4 wiederum durch Strahlenquellen 9, 10 gebildet sind, die jeweils zur Abgabe eines Bearbeitungsstrahls 8a, 8b, insbesondere Laserstrahls, gebildet sind.

Die Bearbeitungsstrahlen 8a, 8b der unterschiedlichen Strahlenquellen 9, 10 werden hierbei dem Werkstück 2 in unterschiedlich verlaufenden, insbesondere eigenständigen, Strahlenpfaden 11 zugeführt. Hierzu sind für jeden der Bearbeitungsstrahlen 8a, 8b eigene Umlenkspiegel 25 vorgesehen.

Wie dargestellt, treffen die beiden Bearbeitungsstrahlen 8a, 8b am Werkstück 2 nicht an der selben Bearbeitungsstelle 6 auf, sondern es treten die ausgangsseitigen Abschnitte 28 der unterschiedlichen Bearbeitungsstrahlen 8a, 8b, die entlang deren Strahlenpfade 11 auf das Werkstück 2 gelenkt werden, jeweils um eine Distanz 40 zueinander beabstandet aus dem Strahlumlenksystem 24 aus. Der strichliert dargestellte Bearbeitungsstrahl 8b ist am Werkstück 2 wirksam und es ist für den weiteren, nicht wirksamen Bearbeitungsstrahl 8a nur dessen imaginärer Strahlenpfad 11 in punktierten Linien dargestellt. Es sind zwei stark vereinfacht (ohne Gehäuse usw.) dargestellte Bearbeitungsköpfe 16 mit der Verstelleinrichtung 5 bewegungsgekoppelt, die vorzugsweise eine gemeinsam verstellbare Bearbeitungseinheit ausbilden, wie dies dargestellt ist. Selbstverständlich ist es auch möglich, dass die einzelnen Bearbeitungsköpfe 16 voneinander unabhängig über die Verstelleinrichtung 5 verstellbar bzw. verfahrbar sind und jeweils durch die Steuervorrichtung 15 für jeden Bearbeitungskopf 16 eigenständige Bearbeitungspfade 17 festgelegt werden.

Es besteht weiters die Möglichkeit, dass sich die Strahlenpfade 11 der unterschiedlichen Bearbeitungsstrahlen 8a, 8b nur in Teilabschnitten des Strahlumlenksystems 24 den selben Verlauf nehmen, wie dies in Fig. 2 dargestellt ist.

Es sei die nicht näher dargestellte, gegebenenfalls mit der Bearbeitungsvorrichtung 1 durchführbare Bearbeitungsmöglichkeit angemerkt, bei der die unterschiedlichen Bearbeitungswerkzeuge 3, 4 der Bearbeitungsvorrichtung 1 zu einem Zeitpunkt gleichzeitig aktiviert sind, diese jedoch jeweils mit unterschiedlichen Werkstücken 2 zur Bearbeitung in Wirkung stehen. Insbesondere können die Bearbeitungsstrahlen 8a, 8b derartig eigenständig kontrolliert werden, dass diese durch das Strahlumlenksystem 24 auf je einen Bearbeitungspunkt 6 auf unterschiedlichen Werkstücken 2 gelenkt werden um eine parallele Bearbeitung von mehreren Werkstücken 2 zu ermöglichen.

Zu den Strahlenquellen 9, 10 sei im Allgemeinen angemerkt, dass mit der ersten Strahlenquelle 9 ein Bearbeitungsstrahl 8a mit einer ersten Wellenlänge bzw. Leistung erzeugt wird und durch die zumindest eine, weitere Strahlenquelle 10 ein Bearbeitungsstrahl 8b mit einer zum ersten Bearbeitungsstrahl 8a unterschiedlichen Wellenlänge bzw. Leistung erzeugt wird. Zu diesem Zweck können die Strahlenquellen 9, 10 durch unterschiedliche Typen von Laserquellen, beispielsweise Gaslaser, insbesondere Kohlendioxidlaser, Festkörperlaser, insbesondere Nd:YAG-Laser, Flüssigkeitslaser oder Halbleiterlaser usw., gebildet sein. Als besonders zweckmäßig hat sich die Verwendung eines CO₂-Lasers für das erste Bearbeitungswerkzeug 3, das als Bearbeitungsstrahl 8a gebildet ist, erwiesen. Eine bevorzugte Ausführungsvariante kann nun darin liegen, dass neben dem von einer CO₂-Laserquelle erzeugten, ersten Bearbeitungsstrahl 8a als weiteres Bearbeitungswerkzeug 4 ein von einem Festkörperlaser, insbesondere Nd:YAG-Laserquelle, erzeugter Bearbeitungsstrahl 8b verwendet wird, da diese beiden Lasertypen unterschiedliche Bearbeitungscharakteristiken aufweisen und somit unterschiedliche Werkstoffgruppen mit jeweils speziellen Bearbeitungseignungen, z.B. Metalle und Kunststoffe, mit der Bearbeitungsvorrichtung 1 bearbeitbar sind.

Wie in den Fig. 2 und 3 dargestellt, kann die Bearbeitungsvorrichtung 1 weiters ein Justagewerkzeug 42 umfassen, mit dem die Bearbeitungswerkzeuge 3, 4 für eine Materialabnahme an der Bearbeitungsstelle 6 am Werkstück 2 voreingestellt bzw. kalibriert werden können. Bevorzugt ist das Justagewerkzeug 42 durch einen von einer weiteren Strahlenquelle 43 erzeugten Justagstrahl 44 gebildet, der über das Strahlenumlenksystem 24 auf die Oberfläche 7 des Werkstücks 2 zur Bildung eines Fokussierungspunktes 45 gerichtet ist.

Durch Verstellen des Justagewerkzeugs 42 kann eine Justage bzw. Kalibrierung des Eingriffs der ein oder mehreren Bearbeitungswerkzeuge 3, 4 am Werkstück 2 simuliert werden, wobei durch Einstellen des Justagewerkzeugs 42 mittels einer Kopplung mit den entsprechenden Bearbeitungswerkzeugen 3, 4 deren Wirkung auf das Werkstück 2 festgelegt wird. Hierzu können die Strahlenquellen 43 zur Erzeugung der Justagestrahlen 44 über Steuerleitungen 46, 47 mit der Steuereinrichtung 15 zur Signalübertragung verbunden sein. Durch den Justagestrahl 44 wird eine Visualisierung des bei Aktivierung an der Bearbeitungsstelle 6 am Werkstück 2 wirkenden Bearbeitungswerkzeugs 3; 4 vorgenommen, wobei der Eingriff bzw. die Wirkung des Bearbeitungswerkzeugs 3; 4 aufgrund dieser Visualisierung, insbesondere aus dem Erscheinungsbild des auf die Oberfläche 7 des Werkstücks 2 projizierten Fokussierungspunktes 45, ersichtlich ist. Durch Justierung des Justagstrahls 44 kann bevorzugt über die Steuereinrichtung 15 gleichzeitig eine Kalibrierung des Bearbeitungsstrahles 8a; 8b, insbesondere durch Einstellung einer Leistung der Strahlenquelle 9, 10 und/oder der Brennweite zwischen Fokussierungslinse 27 und der Oberfläche 7 des Werkstücks 2, vorgenommen werden.

Zu diesem Zweck ist die Strahlenquelle 43 zur Erzeugung eines durch färbiges Licht, beispielsweise rotes, grünes oder blaues Licht, gebildeten Justagestrahls 44 gebildet und es verläuft der Justagestrahl 44 im Strahlenumlenksystem 24 kollinear zu einem Strahlenpfad 11 von zumindest einen der Bearbeitungsstrahlen 8a, 8b.

Es hierbei möglich, dass für jede Strahlenquelle 9, 10 ein derartiges Justagewerkzeug 42, insbesondere die Strahlenquelle 43 zur Erzeugung des Justagestrahls 44, vorgesehen ist, und jede der Strahlenquellen 9, 10 zur Erzeugung der Bearbeitungsstrahlen 8a, 8b separat über das Justagewerkzeug 42 vor Inbetriebnahme kalibriert wird.

Weiters ist es möglich dass der Strahlenpfad 11 des durch die Strahlenquelle 43 erzeugten Justagestrahls 44 zwischen den Strahlengängen mehrerer durch Strahlenquellen 9, 10 erzeugter Bearbeitungsstrahlen 8a, 8b umschaltbar ist, sodass mit nur einem Justagestrahl 44 durch Ändern des Strahlenpfads 11 mehrere Bearbeitungsstrahlen 8a, 8b der Strahlenquellen 9, 10 kalibrierbar bzw. justierbar sind.

Die Ausführungsbeispiele zeigen mögliche Ausführungsvarianten der Bearbeitungsvorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Bearbeitungsvorrichtung 1 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Bearbeitungsvorrichtung
- 2: Werkstück
- 3: Bearbeitungswerkzeug
- 4: Bearbeitungswerkzeug
- 5: Verstelleinrichtung

- 6: Bearbeitungsstelle
- 7: Oberfläche
- 8a: Bearbeitungsstrahl
- 8b: Bearbeitungsstrahl
- 9: Strahlenquelle
- 10: Strahlenquelle

- 11: Strahlenpfad
- 12: Dicke
- 13: Werkstückaufnahme
- 14: Bearbeitungszone
- 15: Steuereinrichtung

- 16: Bearbeitungskopf
- 17: Bearbeitungspfad
- 18: Fertigungsanlage
- 19: Aufstandsfläche
- 20: Innenraum

- 21: Pfeil
- 22: Pfeil
- 23: Zuführ- und Antriebseinrichtung
- 24: Strahlumlenksystem
- 25: Umlenkspiegel

- 26: Reflexionswinkel
- 27: Fokussierungslinse
- 28: Abschnitt
- 29: Führungsanordnung
- 30: Linearführung

- 31: Bewegungserzeuger
- 32: Tragarm
- 33: Steuerleitung
- 34: Steuerleitung
- 35: Steuerleitung

- 36: Achse
- 37: Achse
- 38: Schaltelement
- 39: Wechselschalter
- 40: Distanz

- 41: Bearbeitungseinheit
- 42: Justagewerkzeug
- 43: Strahlenquelle
- 44: Justagestrahl
- 45: Fokussierungspunkt

- 46: Steuerleitung
- 47: Steuerleitung

## Patentansprüche

1. Verfahren zum Steuern mehrerer Bearbeitungswerkzeuge (3, 4) einer Bearbeitungsvorrichtung (1) zur materiellen Bearbeitung von Werkstücken (2), **dadurch gekennzeichnet, dass** eine Bearbeitung des Werkstücks (2) durch ein erstes Bearbeitungswerkzeug (3), das in Form eines Bearbeitungsstrahls (8a) durch eine erste Strahlenquelle (9), insbesondere eine Laserquelle, erzeugt wird, und zumindest ein weiteres Bearbeitungswerkzeug (4) von unterschiedlicher Art oder unterschiedlichen Ursprungs, insbesondere unterschiedlicher Strahlenquelle (10), zum ersten Bearbeitungswerkzeug (3) durchführbar ist, wobei die unterschiedlichen Bearbeitungswerkzeuge (3, 4) wechselweise mit einem Werkstück (2) materiell bearbeitend in Wirkung bringbar sind und zu einem Zeitpunkt von nur einem der Bearbeitungswerkzeuge (3; 4) eine Bearbeitung eines Werkstücks (2) durchgeführt wird.

2. Verfahren nach Anspruch 1, **dadurch gekennzeichnet, dass** das zumindest eine, weitere Bearbeitungswerkzeug (4) in Form eines Bearbeitungsstrahls (8b) durch die weitere Strahlenquelle (10), insbesondere einer weiteren Laserquelle, erzeugt wird.

3. Verfahren nach Anspruch 1 oder 2, **dadurch gekennzeichnet, dass** mit der ersten Strahlenquelle (9) der Bearbeitungsstrahl (8a) mit einer ersten Wellenlänge erzeugt wird und/oder durch die zumindest eine, weitere Strahlenquelle (10) der Bearbeitungsstrahl (8b) mit einer weiteren Wellenlänge erzeugt wird.

4. Verfahren nach einem der vorhergehenden Ansprüche, **dadurch gekennzeichnet, dass** als Strahlenquelle (9, 10) ein Gaslaser, insbesondere Kohlendioxid-Laser, oder ein Festkörperlaser, insbesondere Nd:YAG-Laser, verwendet wird.

5. Verfahren nach Anspruch 1, **dadurch gekennzeichnet, dass** als weiteres Bearbeitungswerkzeug (4) ein Materialabtragemittel in Form eines Mediums, insbesondere einer Flüssigkeit oder eines Gases, das mit einer hohen Relativgeschwindigkeit zum Werkstück (2) auf dessen Oberfläche (7) insbesondere für einen Materialabtrag auftrifft, verwendet wird.

6. Verfahren nach Anspruch 1, **dadurch gekennzeichnet, dass** als weiteres Bearbeitungswerkzeug (4) ein mechanisches Materialabtragemittel, beispielsweise ein Bohrer, Fräser, Meißel oder dgl., verwendet wird.

7. Verfahren nach Anspruch 1, **dadurch gekennzeichnet, dass** als weiteres Bearbeitungswerkzeug (4) ein durch elektrischen Potentialunterschied erzeugtes Materialabtragemittel, insbesondere einen Erosionsfunken oder dgl., verwendet wird.

8. Verfahren nach einem der vorhergehenden Ansprüche, **dadurch gekennzeichnet, dass** eines oder mehrere der Bearbeitungswerkzeuge (3; 4) in einen inaktiven bzw. passiven Modus schaltbar sind und diese hierzu zumindest zeitweise außer materiell bearbeitender Wirkung mit dem Werkstück (2) gebracht werden.

9. Verfahren nach einem der vorhergehenden Ansprüche, **dadurch gekennzeichnet, dass** das als Bearbeitungsstrahl (8a; 8b) gebildete Bearbeitungswerkzeug (3; 4) durch Abschaltung oder Drosselung der abgegeben Leistung der zumindest einen Strahlenquelle (9; 10) in den Bereich eines Nullwerts außer Wirkung mit dem Werkstück (2) gebracht wird.

10. Verfahren nach einem der vorhergehenden Ansprüche, **dadurch gekennzeichnet, dass** das aktive Bearbeitungswerkzeug (3; 4), insbesondere der Bearbeitungsstrahl (8a; 8b), über eine Zuführ- oder Antriebseinrichtung (23), insbesondere ein optisches Strahlumlenksystem (24), zur Bearbeitung mit dem Werkstück (2) in Wirkung gebracht wird oder durch Abschaltung oder Verstellung der Zuführ- oder Antriebseinrichtung (23) außer Wirkung mit diesem gebracht wird.

11. Verfahren nach Anspruch 10, **dadurch gekennzeichnet, dass** der im Strahlumlenksystem (24) verlaufende Bearbeitungsstrahl (8a, 8b) durch Steuerung bzw. Regelung der Stellung oder Position einzelner Umlenkspiegel (25) des Strahlumlenksystems (24) in oder außer Wirkung mit dem Werkstück (2) gebracht wird.

12. Verfahren nach einem der vorhergehenden Ansprüche, **dadurch gekennzeichnet, dass** das Zusammenwirken der Bearbeitungswerkzeuge (3, 4) mit dem Werkstück (2) mittels einer mit den Bearbeitungswerkzeugen (3, 4) oder dem Zuführ- oder Antriebssystem (23) wirkungsgekoppelten Steuereinrichtung (15) gesteuert oder geregelt wird.

13. Verfahren nach Anspruch 12, **dadurch gekennzeichnet, dass** die Bearbeitungswerkzeuge (3, 4) über zumindest ein Schaltelement (38) der Steuereinrichtung (15), insbesondere einem den Bearbeitungswerkzeugen (3, 4) je zugeordneten Ein- oder Ausschalter oder einem Wechselschalter (39) zum Umschalten zwischen den Bearbeitungswerkzeugen (3, 4), automatisiert oder manuell aktiviert oder deaktiviert werden.

14. Verfahren nach einem der vorhergehenden Ansprüche, **dadurch gekennzeichnet, dass** die Bearbeitungsstrahlen (8a; 8b) dem Werkstück (2) im Strahlenumlenksystem (24) jeweils entlang eines zumindest über einen Teilabschnitt gemeinsamen und kollinear verlaufenden Strahlenpfades (11) zugeführt werden.

15. Verfahren nach einem der vorhergehenden Ansprüche, **dadurch gekennzeichnet, dass** die Bearbeitungsstrahlen (8a; 8b) in Abhängigkeit der diese erzeugenden Strahlenquelle (9, 10) dem Werkstück (2) im Strahlenumlenksystem (24) je in voneinander getrennt bzw. distanziert verlaufenden Strahlenpfaden (11) zugeführt werden.

16. Verfahren nach einem der vorhergehenden Ansprüche, **dadurch gekennzeichnet, dass** eine Justierung bzw. Kalibrierung des Eingriffs der ein oder mehreren Bearbeitungswerkzeuge (3, 4) am Werkstück (2) mittels zumindest einem mit den Bearbeitungswerkzeugen (3, 4) wirkungsgekoppelten Justagewerkzeug (42), insbesondere einem von einer weiteren Strahlenquelle (43) erzeugten Justagestrahl (44), erfolgt.

17. Verfahren nach Anspruch 16, **dadurch gekennzeichnet, dass** durch den Justagestrahl (44) eine Visualisierung einer Bearbeitungsstelle (6), an dem eines der Bearbeitungswerkzeuge (3; 4) in aktivem Modus mit dem Werkstück (2) in Eingriff steht, durch Darstellung eines Fokussierungspunktes (45) an einer Oberfläche (17) des Werkstücks (2) erfolgt und hierzu durch die weitere Strahlenquelle (43) zur Erzeugung des Justagestrahls (44) eine färbige Strahlung, insbesondere rotes, grünes oder blaues Licht, ausgesendet wird.

18. Verfahren nach Anspruch 16 oder 17, **dadurch gekennzeichnet, dass** der Justagestrahl (44) im Strahlenumlenksystem (24) kollinear zu dem einen oder mehreren der Strahlenpfade (11) des durch eine der Strahlenquellen (9, 10) erzeugten, am Werkstück (2) wirksamen Bearbeitungsstrahls (8a; 8b) verläuft.

19. Bearbeitungsvorrichtung (1) zur materiellen Bearbeitung von Werkstücken (2) mittels einem Bearbeitungswerkzeug (3; 4), wobei diese eine erste Strahlenquelle (9), insbesondere Laserquelle, zur Erzeugung eines ersten Bearbeitungswerkzeugs (3) in Form eines Bearbeitungsstrahls (8a) aufweist, **dadurch gekennzeichnet, dass** zumindest ein weiteres Bearbeitungswerkzeug (4) von unterschiedlicher Art oder unterschiedlichen Ursprungs, insbesondere unterschiedlicher Strahlenquelle (10), zum ersten Bearbeitungswerkzeug (3) vorgesehen ist und die Bearbeitungswerkzeuge (3, 4) für eine wechselweise Bearbeitung eines Werkstückes (2) ausgebildet sind, wobei zu einem Zeitpunkt an einem zu bearbeitenden Werkstück (2) nur eines der zumindest zwei Bearbeitungswerkzeuge (3; 4) wirksam ist.

20. Bearbeitungsvorrichtung nach Anspruch 19, **dadurch gekennzeichnet, dass** das weitere Bearbeitungswerkzeug (4) durch einen von der weiteren, eigenständigen Strahlenquelle (10), insbesondere Laserquelle, erzeugten Bearbeitungsstrahl (8b) gebildet ist.

21. Bearbeitungsvorrichtung nach Anspruch 19 oder 20, **dadurch gekennzeichnet, dass** die unterschiedlichen Strahlenquellen (9, 10) zur Erzeugung von Bearbeitungsstrahlen (8a, 8b) mit unterschiedlichen Wellenlängen gebildet sind, insbesondere durch einen Kohlendioxid- Laser und einen Nd:YAG- Laser.

22. Bearbeitungsvorrichtung nach einem der Ansprüche 19 bis 21, **dadurch gekennzeichnet, dass** das weitere Bearbeitungswerkzeug (4) in Art eines mechanischen Materialabtragemittels, insbesondere eines Fräsers, Bohrers, Meißels oder dgl., ausgebildet ist.

23. Bearbeitungsvorrichtung nach einem der Ansprüche 19 bis 22, **dadurch gekennzeichnet, dass** das weitere Bearbeitungswerkzeug (4) durch ein durch elektrischen Potentialunterschied erzeugtes Materialabtragemittel, insbesondere einen Erosionsfunken oder dgl., gebildet ist.

24. Bearbeitungsvorrichtung nach einem der Ansprüche 19 bis 23, **dadurch gekennzeichnet, dass** das weitere Bearbeitungswerkzeug (4) durch ein unter Druck stehendes bzw. freigesetztes Medium, insbesondere eine Flüssigkeit, z.B. einen Wasserstrahl oder ein Gas, gebildet ist.

25. Bearbeitungsvorrichtung nach einem der Ansprüche 19 bis 24, **dadurch gekennzeichnet, dass** zur Herstellung eines Eingriffs bzw. einer Wirkung von einem der Bearbeitungswerkzeuge (3, 4) mit dem Werkstück (2) eine Zuführ- oder Antriebseinrichtung (23), insbesondere ein optisches Strahlumlenksystem (24) mit Umlenkspiegeln (25), vorgesehen ist.

26. Bearbeitungsvorrichtung nach einem der Ansprüche 19 bis 25, **dadurch gekennzeichnet, dass** eine Steuereinrichtung (15) mit den Bearbeitungswerkzeugen (3, 4) oder der Zufuhr- oder Antriebseinrichtung (23) zur Steuerung oder Regelung des Zusammenwirkens der Bearbeitungswerkzeuge (3, 4) mit dem Werkstück (2) verbunden ist.

27. Bearbeitungsvorrichtung nach einem der Ansprüche 19 bis 26, **dadurch gekennzeichnet, dass** die Bearbeitungswerkzeuge (3, 4) oder die Zuführ- oder Antriebseinrichtung (23) mit zumindest einem Schaltelement (38), insbesondere einem Ein- oder Ausschalter oder einem Wechselschalter (39), der Steuereinrichtung (15) zu deren manueller oder automatisierter Aktivierung oder Deaktivierung wirkungsgekoppelt sind.

28. Bearbeitungsvorrichtung nach Anspruch 27, **dadurch gekennzeichnet, dass** die Steuereinrichtung (15) zur Festlegung der Leistung des durch die zumindest eine Strahlenquelle (9; 10) erzeugten Bearbeitungsstrahls (8a; 8b) zwischen einem Nullniveau und einem Arbeitsniveau ausgebildet ist.

29. Bearbeitungsvorrichtung nach einem der Ansprüche 25 bis 28, **dadurch gekennzeichnet, dass** die Strahlenpfade (11) für die durch die unterschiedlichen Strahlenquellen (9, 10) zu erzeugenden Bearbeitungsstrahlen (8a, 8b) im Strahlumlenksystem (24) zumindest über einen Teilabschnitt kollinear verlaufen.

30. Bearbeitungsvorrichtung nach einem der Ansprüche 25 bis 28, **dadurch gekennzeich** **net, dass** die Strahlenpfade (11) für die durch die unterschiedlichen Strahlenquellen (9, 10) zu erzeugenden Bearbeitungsstrahlen (8a, 8b) im Strahlumlenksystem (24) je getrennt bzw. voneinander distanziert verlaufen.

31. Bearbeitungsvorrichtung nach einem der Ansprüche 25 bis 30, **dadurch gekennzeichnet, dass** die Strahlenpfade (11) der Bearbeitungsstrahlen (8a; 8b) unabhängig von der diesen erzeugenden Strahlenquelle (9; 10) über dieselben Umlenkspiegel (25) verlaufen oder die Strahlenpfade (11) der Bearbeitungsstrahlen (8a, 8b) für jede Strahlenquelle (9; 10) zumindest teilweise über eigens vorgesehene Umlenkspiegel (25) verlaufen.

32. Bearbeitungsvorrichtung nach einem der Ansprüche 19 bis 31, **dadurch gekennzeichnet, dass** ein Justagewerkzeug (42) vorgesehen ist, das zur Visualisierung einer Bearbeitungsstelle (6) am Werkstück (2), an dem eines der Bearbeitungswerkzeuge (3, 4) in aktivem Modus in Eingriff mit dem Werkstück (2) steht, ausgebildet ist.

33. Bearbeitungsvorrichtung nach Anspruch 32, **dadurch gekennzeichnet, dass** das Justagewerkzeug (42) durch einen von einer weiteren Strahlenquelle (43) erzeugten, färbigen Justagestrahl (44) bzw. Lichtstrahl gebildet ist.

34. Bearbeitungsvorrichtung nach Anspruch 33, **dadurch gekennzeichnet, dass** der Justagestrahl (44) im Strahlumlenksystem (24) kollinear zu dem Strahlengang bzw. Pfad des zumindest einen als Bearbeitungsstrahl (8a, 8b) gebildeten Bearbeitungswerkzeugs (3; 4) verläuft.
